# EUROPÄISCHE PATENTANMELDUNG

(11) **EP 0 911 935 A1**
(43) Veröffentlichungstag der Anmeldung: **28.04.1999**
(21) Anmeldenummer: 98117702.5
(22) Anmeldetag: 18.09.1998
(51) Int. Cl.: H02G 15/103, H02G 15/184, H01R 13/53

(54) **Kabelendverschluss oder Kabelmuffe**

(30) Priorität: 21.10.1997 DE 19746312
(71) Anmelder: ABB PATENT GmbH, 68309 Mannheim (DE)
(72) Erfinder: Leonhardt, Gottfried, Dipl-Ing., 68723 Oftersheim (DE)
(74) Vertreter: Miller, Toivo

(57) **Zusammenfassung**

Es werden ein Kabelendverschluß oder eine Kabelmuffe mit einem Isolierkörper vorgeschlagen, in den ein Feldsteuerelement eingelegt ist. Das Feldsteuerelement ist zweiteilig oder dreiteilig und zusammensteckbar ausgebildet, bestehend aus einem für alle unterschiedlichen Kabeldurchmesser gleichen, ringförmigen Grundelement (2) aus einem elektrisch leitfähigem Material und einem oder zwei schlauchförmigen Zusatzelementen (3, 12) aus einem refraktivem oder resistiven Material, deren Innendurchmesser dem jeweiligen Kabeldurchmesser angepaßt sind. Hierdurch wird eine refraktive oder resistive Feldsteuerung bewirkt und es kann für Kabelendverschlüsse und Kabelmuffen unterschiedlicher Kabeldurchmesser stets das gleiche, relativ kompliziert ausgebildete Grundelement (2) des Feldsteuerelementes verwendet werden. Die Anpassung an den jeweiligen Kabeldurchmesser erfolgt ausschließlich durch die unterschiedlichen, relativ einfach ausgebildeten Zusatzelemente (3).

## Beschreibung

Die Erfindung bezieht sich auf einen Kabelendverschluß oder eine Kabelmuffe gemäß den Oberbegriffen der nebengeordneten Ansprüche 1 und 2.

Aus der Druckschrift KUD 1095 D (4.96/2) WDW 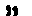 Steckendverschlüsse und Zubehör für Innenkonus- und Außenkonussysteme 12 - 36 kV" der ABB Kabel und Draht GmbH, Seiten 12, 13 und 17 sind Steckendverschlüsse für den Anschluß eines Kabels an ein elektrisches Gerät (beispielsweise an eine gekapselte Schaltanlage) bekannt. Derartige Steckendverschlüsse (allgemein Kabelendverschlüsse) weisen einen Isolierkörper auf, in den mindestens eine aus einem elektrisch leitfähigen Material bestehende Glättungselektrode (allgemein ein Feldsteuerelement) eingelegt ist. Diese Glättungselektrode dient der geometrischen Feldsteuerung und umschließt den Leiteranschlußbereich innerhalb des Steckendverschlusses.

Dabei ist es üblich, sowohl den Isolierkörper als auch das Feldsteuerelement in Stufen an den jeweiligen Kabeldurchmesser bzw. Kabelquerschnitt des Anwendungsfalles anzupassen Für verschiedene Garniturengrößen gibt es somit ein eigenes Feldsteuerelement. Bei Fertigung des Feldsteuerelementes aus einem elektrisch leitfähigen Elastomer sind deshalb viele unterschiedliche Herstellformen erforderlich.

Da diese Feldsteuerelemente zudem für gerade, L-förmige und T-förmige Kabelendverschlüsse unterschiedlich auszubilden sind, ergibt sich eine Vielzahl unterschiedlicher zu produzierender Feldsteuerelemente mit jeweils unterschiedlichen Abmessungen.

Der Erfindung liegt die Aufgabe zugrunde, einen Kabelendverschluß oder eine Kabelmuffe der eingangs genannten Art anzugeben, welcher bzw. welche eine kostengünstige Fertigung ermöglicht.

Diese Aufgabe wird alternativ in Verbindung mit den Merkmalen des Oberbegriffes erfindungsgemäß durch die im Kennzeichen der Anspruchs 1 und 2 angegebenen Merkmale gelöst.

Die mit der Erfindung erzielbaren Vorteile bestehen insbesondere darin, daß für Kabelendverschlüsse und Kabelmuffen unterschiedlichen Kabeldurchmessers stets das gleiche, relativ kompliziert ausgebildete Grundelement des Feldsteuerelementes verwendet werden kann. Zur Fertigung des Grundelementes aus einem Elastomer ist nur noch eine einzige Gießform erforderlich. Die Anpassung an den jeweiligen Kabeldurchmesser erfolgt ausschließlich durch unterschiedliche, relativ einfach als Schläuche ausgebildete Zusatzelemente. Durch dieses Baukastensystem werden die Fertigungskosten gesenkt, da beispielsweise das Grundelement in höheren Stückzahlen produziert werden kann. Es muß nicht mehr in nachteiliger Weise für jeden Kabeldurchmesser ein unterschiedliches einstückiges Feldsteuerelement hergestellt werden, was relativ hohe Formkosten infolge der Produktion und des Einsatzes vieler unterschiedlicher, kompliziert gestalteter Herstellungsformen verursacht. Die Zusatzelemente sind für die erforderlichen Innendurchmesser sehr preiswert imExtrusionsverfahren herstellbar.

Die refraktive und/oder resistive Feldsteuerung hat allgemein gegenüber der geometrischen Feldsteuerung den Vorteil, daß die Kanten der zur Feldsteuerung herangezogenen Bauteile nicht problematisch hinsichtlich möglicher nachteiliger örtlicher Feldstärkeerhöhungen sind.

Die Erfindung wird nachstehend anhand der in der Zeichnung dargestellten Ausführungsbeispiele erläutert. Es zeigen:
- Fig. 1: einen Isolierkörper eines Kabelendverschlusses im Querschnitt,
- Fig. 2: einen Isolierkörper einer Kabelmuffe im Querschnitt.

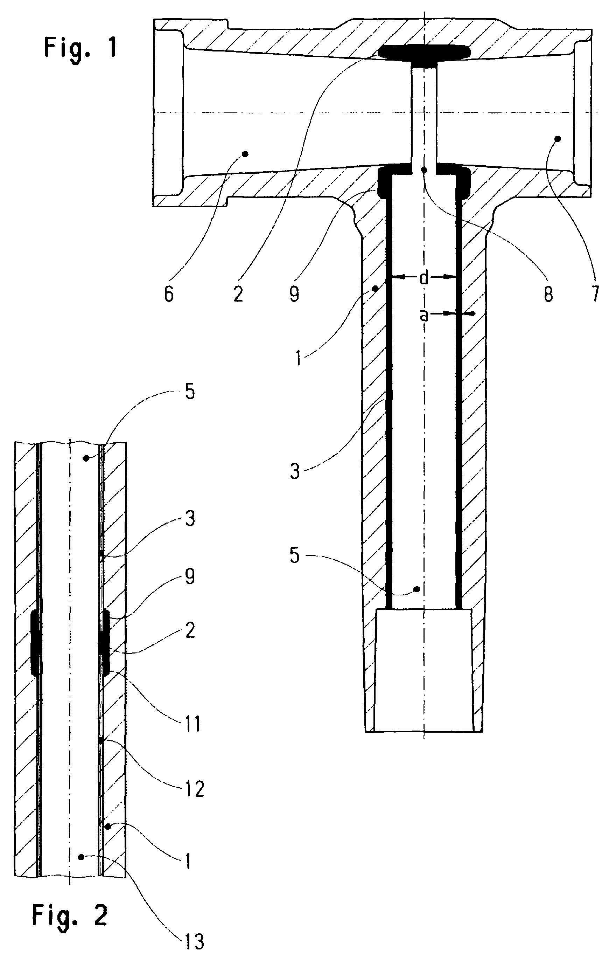

In Fig. 1 ist ein Isolierkörper 1 im Querschnitt zu erkennen. Dabei handelt es sich beispielhaft um einen aus Silikonkautschuk bestehenden Isolierkörper für einen T-förmigen Kabelendverschluß, die Erfindung ist jedoch in gleicher Weise für L-förmige oder gerade Kabelendverschlüsse oder für Kabelmuffen verwendbar. Der Isolierkörper 1 weist drei Öffnungen auf, nämlich eine Öffnung 5 zur Einführung eines Kabels, eine Öffnung 6 zur Aufnahme der in diesem Zusammenhang nicht weiter interessierenden Steckmechanik und eine für ein Abschlußstück geeignete Öffnung 7.

Zur Feldsteuerung weist der Isolierkörper 1 ein zweiteilig ausgebildetes Feldsteuerelement auf. Das Feldsteuerelement besteht aus einem ringförmigen Grundelement 2 und einem schlauchförmigen Zusatzelement 3. Das Grundelement 2 ist aus einem elektrisch leitfähigem Material, vorzugsweise aus einem Elastomer, hergestellt. Insbesondere dient ein elektrisch leitfähiger Silikonkautschuk für die Fertigung mittels Gießform.

Das Zusatzelement 3 ist aus einem refraktiven und/oder resistiven Material gefertigt. Bei Verwendung eines refraktiven Materials bildet das Zusatzelement einen kapazitiven Spannungsteiler mit der Kabelisolierung, bei Einsatz eines resistiven Materials erfolgt der Spannungsabbau ohmsch.

Das ringförmige Grundelement 2 kleidet diejenige Zone der Öffnungen 6, 7 aus, welche sich im Bereich der Einmündung der Öffnung 5 in diese Öffnungen 6, 7 befindet. Die besagte Einmündung selbst erfolgt durch eine Öffnung 8 in der Wandung des Grundelementes 2. Ringförmig um diese Öffnung 8 weist das Grundelement 2 einen Wulst 9 auf, welcher zum Einstecken des Zusatzelementes 3 geeignet ist. Das schlauchförmige Zusatzelement 3 greift mit seinem einen Endbereich in den ringförmigen Wulst 9 ein.

Als Varianten zum Anfügen des Zusatzelementes an das Grundelement kann einAufstecken des Zusatzelements 3 auf das Grundelementes erfolgen, oder das Grundelement kann mit einer Ringnut versehen sein, in die das Zusatzelement eingesteckt wird.

Das in Fig. 1 gezeigte Ausführungsbeispiel betrifft einen Kabelendverschluß für ein Kabel mit einem relativ großem Kabeldurchmesser und damit einem entsprechend großen Innendurchmesser d des Isolierkörpers 1. Bei Ausführungsformen mit kleinerem Kabeldurchmesser wird das gleiche Grundelement 2 verwendet, während das Zusatzelement 3 eine größere Wandstärke a aufweist, um den geringeren Innendurchmesser d zu realisieren. Der Außendurchmesser des Zusatzelementes 3 bleibt jedoch unverändert, wodurch für die verschiedenen Ausführungsgrößen sichergestellt ist, daß stets das gleiche Grundelement 2 herangezogen werden kann.

Wie bereits vorstehend angedeutet ist, kann das aus einem Grundelement und je nach Kabeldurchmesser unterschiedlichen Zusatzelementen bestehende Feldsteuerelement 2+3 nicht nur bei Kabelendverschlüssen in T-Form, sondern auch bei geraden oder L-förmigen Kabelendverschlüssen und bei Kabelmuffen Verwendung finden. Bei geraden Kabelendverschlüssen und bei Kabelmuffen weist das Grundelement 2 selbstverständlich die Öffnung 8 nicht auf, sondern der Wulst 9 ist unmittelbar an die zum Kabel gerichtete Ringkante angeformt.

Bei Kabelmuffen weist das Grundelement an seinen beiden Ringkanten entsprechende Wülste auf, welche zum Einstecken von Zusatzelementen zu beiden Seiten des Zusatzelementes dienen, d. h. das Feldsteuerelement ist bei Kabelmuffen nicht zwei- sondern dreiteilig ausgebildet.

In Fig. 2 ist hierzu ein Schnitt durch den Isolierkörper einer Kabelmuffe dargestellt. Die Öffnungen des Isolierkörpers 1 zum Einführen der beiden zu verbindenden Kabel sind mit den Ziffern 5, 13 bezeichnet. Das ringförmige Grundelement 2 weist an seinen beiden Ringkanten Wülste 9, 11 auf, welche die beidseitig des Grundelementes eingesteckten Zusatzelemente 3, 12 überdecken. Die Kanten der Wülste 9, 11 sind abgerundet.

## Patentansprüche

1. Kabelendverschluß mit einem Isolierkörper, in den mindestens ein Feldsteuerelement eingelegt ist, dadurch gekennzeichnet, daß das Feldsteuerelement zweiteilig ausgebildet ist, bestehend aus einem für mehrere unterschiedliche Kabeldurchmesser gleichen, ringförmigen Grundelement (2) aus einem elektrisch leitfähigem Material und einem schlauchförmigen Zusatzelement (3) aus einem refraktiven und/oder resistiven Material, wobei der Innendurchmesser (d) des Zusatzelementes dem jeweiligen Kabeldurchmesser angepaßt ist und das Zusatzelement (3) sowie das Grundelement (2) einander in einem Randbereich überdecken.

2. Kabelmuffe mit einem Isolierkörper, in den mindestens ein Feldsteuerelement eingelegt ist, dadurch gekennzeichnet, daß das Feldsteuerelement dreiteilig ausgebildet ist, bestehend aus einem für mehrere unterschiedliche Kabeldurchmesser gleichen, ringförmigen Grundelement (2) aus einem elektrisch leitfähigen Material und zwei schlauchförmigen Zusatzelementen (3, 12) aus einem refraktiven und/oder resistiven Material, wobei der Innendurchmesser (d) der Zusatzelemente dem jeweiligen Kabeldurchmesser angepaßt ist und jedes Zusatzelement (3, 12) sowie das Grundelement (2) einander in Randbereichen überdecken.

3. Kabelendverschluß oder Kabelmuffe nach Anspruch 1 oder 2, dadurch gekennzeichnet, daß das Grundelement (2) aus einem elektrisch leitfähigen Elastomer gefertigt ist.
